Europäisches Patentamt

European Patent Office

Office européen des brevets

(11) Publication number: **0 519 222 A1**

# EUROPEAN PATENT APPLICATION

(21) Application number: **92108355.6**

(22) Date of filing: **18.05.92**

(51) Int. Cl.⁵: **B32B 27/30**, C08L 27/06, C09D 127/06

(30) Priority: **17.05.91 IT TO910371**

(43) Date of publication of application:
**23.12.92 Bulletin 92/52**

(84) Designated Contracting States:
**DE ES FR GB SE**

(71) Applicant: **FIAT AUTO S.p.A.**
**Corso Giovanni Agnelli 200**
**I-10135 Torino(IT)**

(72) Inventor: **Padello, Giovanni**
**Via Puccini, 15**
**I-10024 Moncalieri(IT)**

(74) Representative: **Plebani, Rinaldo et al**
**c/o Studio Torta, Via Viotti 9**
**I-10121 Torino(IT)**

(54) **Thermoformable sheet material, in particular for covering internal finishing members of a vehicle.**

(57) A thermoformable sheet material is described, in particular for covering internal finishing members of a vehicle; the material is obtained from a plurality of thermoformable sheets all having substantially the same chemical composition, which are joined in a superimposed manner by hot coupling so as to obtain a material substantially having a single layer.

Fig.1

The present invention relates to a thermoformable sheet material, in particular for covering internal finishing members of a vehicle and a method of manufacturing this material.

Internal finishing details of the dashboard and/or door cover panels of vehicles are known and are formed by a foam material covered in turn by finishing sheets having specific aesthetic characteristics fixed to the foam material by a thermoforming process.

Use is currently made in a specific car of a synthetic plastic sheet material known by the technical term "two-layer".

This material is formed by two sheets having different respective chemical compositions joined by an adhesive; each of these sheets is formed by a series of superimposed layers and the overall "two-layer" material is subject, prior to the thermoforming operation, to an embossing process using a cylinder covered with a layer of silicone so as to improve its aesthetic qualities and in particular to provide its visible surface with a two-tone effect.

This "two-layer" material is formed by a first outer sheet comprising a spread PVC (polyvinyl chloride in emulsion) based layer to which appropriate additives have been added (plasticizer, stabilizer, colouring, etc.) and an outer layer of lacquers and a second lower layer in turn formed by two calendered sheets each of which is PVC and ABS (acrylonitrile-butadiene-styrene) based and may also comprise additives, normally including a fluid stabilizer containing, inter alia, tin mercaptide.

As a result of the presence of this compound and because of its intrinsic structure as described above, the "two-layer" material has the drawback that it gives rise to unpleasant odours in the vehicle following possible contamination with amines which may take place after the operation to mount the covered detail in the vehicle and also during the normal use of the vehicle.

The object of the invention is to provide a thermoformable sheet material which has aesthetic qualities which are substantially comparable with those of the "two-layer" material in current use and which, in particular, has the ability to be embossed with a two-tone effect by current silicone cylinders, but which does not have the drawback of giving rise to unpleasant odours in the presence of amines in the passenger space of the vehicle. A further object of the invention is to provide a method for obtaining this material.

This object is achieved by the invention which relates to a thermoformable sheet material in particular for covering internal finishing members of a vehicle, comprising a plurality of superimposed layers, characterized in that these layers are formed by respective thermoformable sheets all having substantially the same chemical composition which are connected in a superimposed manner by hot coupling so that the sheet material appears substantially as a single layer.

The invention also relates to a method of manufacturing a thermoformable sheet material in particular for covering internal finishing members of a vehicle, characterized in that a plurality of sheets of thermoformable synthetic material all having substantially the same chemical composition are connected in a superimposed manner by hot coupling so as to obtain a final product substantially having a single layer.

The invention is set out in further detail in the following non-limiting description of an embodiment thereof made with reference to the accompanying drawings, in which:

Fig. 1 is a diagrammatic cross-section through the material of the invention;

Figs. 2 to 5 are comparative experimental graphs of the properties of the material of Fig. 1 and those of a known material.

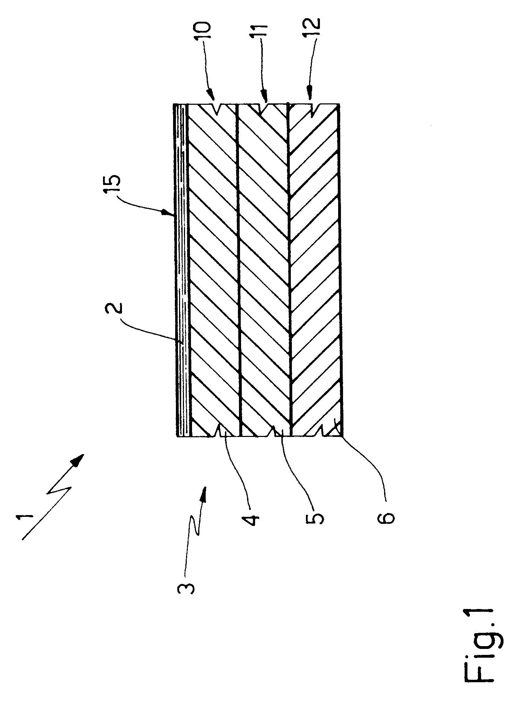

In Fig. 1, a thermoformable sheet material produced in accordance with the invention is shown by 1 and is adapted in particular for use as a covering for internal finishing members in foam of vehicles, for instance the dashboard or instrument panel and/or the door panels.

The sheet material 1 whose outer appearance has, to the naked eye, a substantially single layered structure, in contrast to covering materials currently in use which have a "two-layer" structure to the naked eye, in practice comprises four superimposed layers obtained, in accordance with the invention, by a known process of superimposition and connection by hot coupling of a plurality of sheets 10, 11, 12 made from a thermoformable synthetic material and having the feature that all these sheets have substantially the same chemical composition.

In accordance with the invention, the material 1 has a first upper layer of lacquer 2, an intermediate pair 3 of layers 4 and 5 having an identical chemical composition and a base layer 6. The layers 2, 4 are formed by the first sheet 10, while the layer 5 is formed by the second sheet 11 and the layer 6 by the third sheet 12. The layers 4 and 5 have the following composition: PVC, ABS, plasticizer, stabilizer, modifier and colouring. The layer 6 also contains, although in different proportions, PVC, ABS, plasticizer, stabilizer, modifier and colouring. Consequently the three sheets 10, 11, 12 have substantially the same chemical composition: in practice, leaving aside their different percentage compositions, they are identical except for the sheet 10 whose surface 15, which remains visible in use, is covered by the finishing layer of lacquer 2.

The first layer 2 of lacquer accounts for 0.3% of the total percentage composition of the material 1; the intermediate pair 3 of layers 4 and 5 accounts for 68.4% of the composition of the material 1 and the fourth layer 6 accounts for 31.3% of the percentage composition of this material 1.

The stabilizer compound contained in each of the sheets 10, 11, 12 is a stabilizing product based on calcium and zinc salts which is known per se, for instance BAEROSTAB 114 manufactured by COMMER.

In particular the layers 4 and 5 both contain PVC at a percentage, referred to the total of the material 1, of between 10% and 30%, ABS at a percentage varying between 5% and 15%, plasticizer between 3% and 15%, stabilizer (Ca/Zn) at a percentage of between 0.2% and 10%, modifier (for instance ELVALOY 741 (Registered Trademark) made by DUPONT) between 0.5% and 10%, colouring (for instance black) between 1% and 10%.

The fourth base layer 6 comprises PVC at a percentage, referred to the total composition of the material 1, of between 5% and 20%, ABS at a percentage varying between 5% and 20%, plasticizer between 3% and 15%, stabilizer (Ca/Zn) at a percentage of between 0.2% and 10%, modifier (for instance ELVALOY 741) between 0.5% and 10% and finally colouring (black) between 0.5% and 10%.

The material of the invention is further described in the following practical example.

EXAMPLE

Various batches of "single layer" material were produced by hot coupling of three sheets of thermoformable material having the following average percentage composition:

| Sheet 1 - surface | |
| --- | --- |
| Surface layer of lacquer (vinyl acrylic) | 0.3% |
| PVC | 13.6% |
| ABS | 8.2% |
| Plasticizer (Trimellitate C6-C8) | 4.4% |
| Stabilizer Zn/Ca (Baerostab 114) | 0.6% |
| Acrylic resin | 0.1% |
| Elvaloy 741 | 3.8% |
| Colouring (black) | 3.5% |

| Sheet 2 - intermediate: | |
| --- | --- |
| PVC | 13.6% |
| ABS | 8.2% |
| Plasticizer (Trimellitate C6-C8) | 4.4% |
| Stabilizer Zn/Ca (Baerostab 114) | 0.6% |
| Acrylic resin | 0.1% |
| Elvaloy 741 | 3.8% |
| Colouring (black) | 3.5% |

| Sheet 3 - base: | |
| --- | --- |
| PVC | 8.9% |
| ABS | 14.4% |
| Plasticizer (Trimellitate C6-C8) | 6.6% |
| Stabilizer Zn/Ca (Baerostab 114) | 0.7% |
| Acrylic resin | 0.15% |
| Colouring (black) | 0.55% |

Coupling was carried out at a temperature of between 170° and 190°C with an embossing pressure between a rubber cutter and pressing cylinder of a maximum of 4 tonnes.

Comparative experimental laboratory tests were then carried out on these batches to verify the aesthetic and mechanical properties of the material of the invention having the composition described above, with respect to a known "two-layer" material used for car coverings.

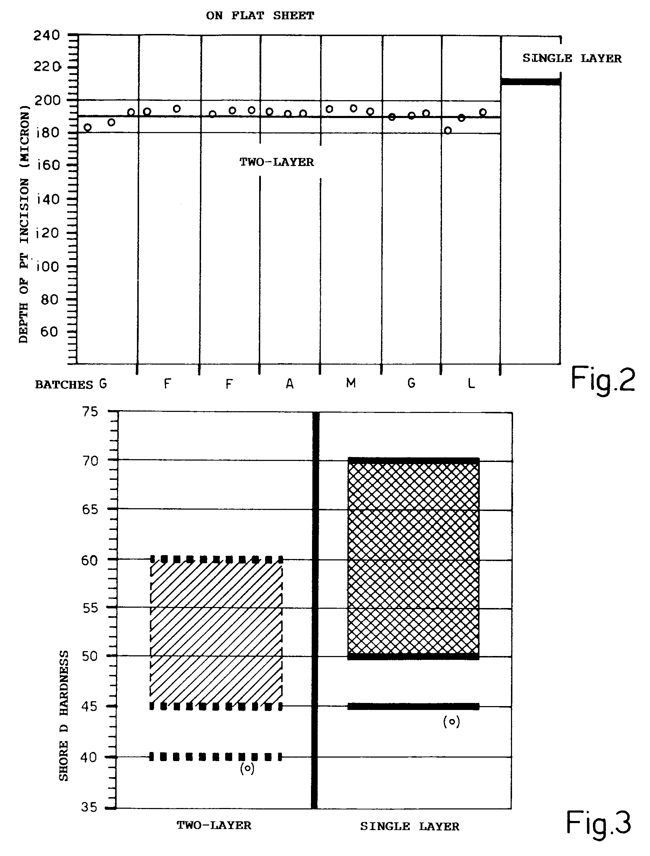

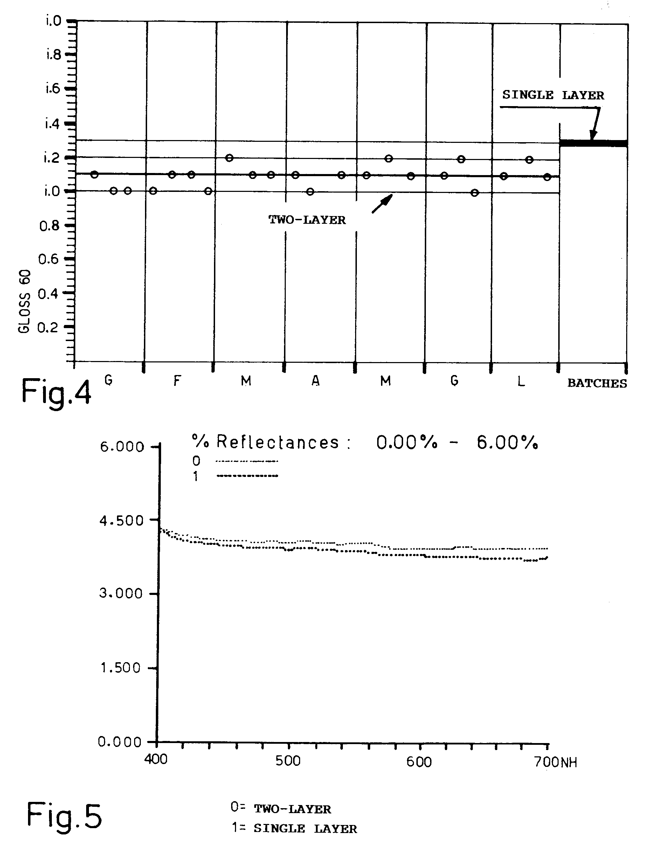

These tests, carried out after embossing the surfaces of both materials by passage under a cylinder with a silicone sheath were: hardness (Shore D), roughness, reflection, colour (two-tone effect). The results obtained are shown in graph form in Figs. 2 to 5 and confirmed that the aesthetic and mechanical properties of the two materials were substantially the same, including the two-tone effect at the location of the embossing.

An amine contamination test was then conducted by causing identical quantities of "two-layer" and "single layer" material to come into contact with an amine catalyst for PV foams (0.2 - 0.3 g). Following contamination, the "two-layer" material gave off an unpleasant odour while the "single layer" material did not give off any odour.

The advantages linked to the invention are evident from the above description: the material 1 has substantially the same aesthetic and mechanical properties as the "two-layer" material currently in use; it can, moreover, be thermoformed and subjected to embossing to improve its aesthetic qualities. As a result of its single layer macrostructure which does not require the use of adhesives and the particular chemical composition used, it does not have the drawback of giving off unpleasant odours.

## Claims

1. Thermoformable sheet material, in particular for covering internal finishing members of a vehicle, comprising a plurality of superimposed layers, characterized in that these layers are formed by respective thermoformable sheets all having substantially the same chemical composition which are connected in a superimposed manner by hot coupling so that the sheet material appears substantially as a single layer.

2. Thermoformable material as claimed in claim 1, characterized in that it comprises a first upper layer of lacquer, an intermediate pair of layers based on a mixture of PVC, ABS and associated plasticizer, stabilizer, modifier and colouring substances, and a base layer in turn comprising PVC, ABS, plasticizers, stabilizers, modifiers and colouring.

3. Thermoformable material as claimed in claim 2, characterized in that the first upper layer of lacquer accounts for 0.3% of the percentage composition of this material; the intermediate pair of layers accounts for 68.4% of the composition of this material and the fourth layer accounts for 31.3% of the percentage composition of this material.

4. Thermoformable material as claimed in claims 2 or 3, characterized in that the stabilizer contained in each of the layers is a stabilizer product prepared from calcium and zinc.

5. Method of manufacture of a thermoformable sheet material, in particular for covering internal finishing members of a vehicle, characterized in that a plurality of sheets of thermoformable synthetic material all having substantially the same chemical composition are connected in a superimposed manner by hot coupling so as to obtain a final product substantially having a single layer.

6. Method of manufacture as claimed in claim 5, characterized in that the following are joined: a first upper sheet comprising a surface layer of lacquer and having the following composition: PVC at a percentage, referred to the total of the material, of between 10% and 30%, ABS at a percentage varying between 5% and 15%, plasticizer between 3% and 15%, stabilizer at a percentage of between 0.2% and 10%, modifier between 0.5% and 10% and colouring between 1% and 10%, a second intermediate sheet having an identical composition to the first sheet apart from the layer of lacquer and a third base sheet comprising PVC at a percentage, referred to the total composition of the material, of between 5% and 20%, ABS at a percentage varying between 5% and 20%, plasticizer between 3% and 15%, stabilizer at a percentage of between 0.2% and 10%, modifier between 0.5% and 10% and colouring between 0.5% and 10%.

Fig.1

EP 0 519 222 A1

ON FLAT SHEET

Fig.2

Fig.3

Fig.4

SINGLE LAYER

TWO-LAYER

GLOSS 60

G    F    M    A    M    G    L    BATCHES

Fig.5

% Reflectances :   0.00% - 6.00%

0
1

400    500    600    700 NH

0= TWO-LAYER

1= SINGLE LAYER

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0 288 723 (ALKOR GMBH KUNSTSTOFFE) | 1 | B32B27/30 |
| A | * abstract; claims; example 5 * | 2-6 | C08L27/06 |
| | --- | | C09D127/06 |
| X | EP-A-0 298 282 (ALKOR GMBH KUNSTSTOFFE) | 1 | |
| A | * abstract; claims * | 2-6 | |
| | --- | | |
| X | EP-A-0 099 455 (ALKOR GMBH KUNSTSTOFFVERKAUF) | 1 | |
| A | * abstract; claims * | 2-6 | |
| | --- | | |
| A | FR-A-2 268 831 (HOOKER CHEMICALS & PLASTICS CORPORATION) * claims * | 1-6 | |
| | | | TECHNICAL FIELDS SEARCHED (Int. Cl.5 ) |
| | | | B32B C08L C09D |

The present search report has been drawn up for all claims

| Place of search | Date of completion of the search | Examiner |
|---|---|---|
| THE HAGUE | 22 JULY 1992 | DE JONGE S.J.P. |